# EUROPÄISCHE PATENTSCHRIFT

(11) **EP 1 572 405 B1**
(45) Veröffentlichungstag und Bekanntmachung des Hinweises auf die Patenterteilung: **30.04.2014**
(21) Anmeldenummer: 03799451.4
(22) Anmeldetag: 18.12.2003
(51) Int. Cl.: B23B 51/06

(54) **KÜHLKANAL-GEOMETRIE**
COOLING CHANNEL GEOMETRY
GEOMETRIE DE CANAL DE REFROIDISSEMENT

(30) Priorität: 19.12.2002 DE 20219761 U; 20.12.2002 DE 20219824 U
(43) Veröffentlichungstag der Anmeldung: 14.09.2005
(60) Teilanmeldung: 11165638.5
(73) Patentinhaber: Gühring oHG, 72458 Albstadt (DE)
(72) Erfinder: KLEINER, Gilbert, 72514 Inzighofen (DE)
(74) Vertreter: Winter, Brandl, Fürniss, Hübner, Röss, Kaiser, Polte - Partnerschaft
(86) Internationale Anmeldenummer: PCT/DE2003/004276
(87) Internationale Veröffentlichungsnummer: WO 2004/056519

(56) Entgegenhaltungen:
- DE-A- 3 629 035
- US-A- 2 422 994
- US-A- 2 935 996
- PATENT ABSTRACTS OF JAPAN Bd. 0130, Nr. 06 (M-781), 9. Januar 1989 (1989-01-09) -& JP 63 216611 A (MITSUBISHI METAL CORP), 8. September 1988 (1988-09-08)
- KENNAMETAL HERTEL UK: "Master Catalogue 2001" 2001, KENNAMETAL HERTEL UK , ENGLAND , XP002285111 Bohrer B211 auf Seite 4 Seite 33
- DATABASE WPI Week 197840, Derwent Publications Ltd., London, GB; AN 1978-H8113A -& SU 580 046 A (CHELY MACH TOOL WKS) 11 November 1977

## Beschreibung

Die Erfindung betrifft ein drehangetriebenes Zerspanungs- bzw. Einsatzwerkzeug, insbesondere einen Bohrer, gemäß dem Oberbegriff des Anspruch 1.

Zur Kühl- bzw. Schmiermittelzufuhr weisen Zerspanungswerkzeuge Innenkühlkanäle auf, durch die das Kühlmittel zur Bohrerspitze geleitet wird. Neben der Funktion, die Bohrerspitze zu kühlen bzw. zu schmieren kommt dem Kühlmittel auch die Funktion zu, die Spanabfuhr zu verbessern.

Um die Späne aus der Spannut herauszutransportieren muss, insbesondere beim Tieflochbohren, das Kühlmittel teilweise unter hohem Druck zugeleitet werden, wobei der Innenkühlkanal bzw. der Bohrer entsprechende Drücke zerstörungsfrei ertragen muss. Dabei ist man gerade im Zuge der sich verbreitenden Mindermengenschmierung bestrebt, die Kühlkanäle möglichst großvolumig auszulegen. Zudem besteht ein Bedarf, immer kleinere und längere Bohrlöcher erstellen zu können. Mit zunehmender Länge und abnehmenden Durchmesser des Bohrwerkzeugs wird es aber immer schwieriger, die Innenkühlkanäle so zu dimensionieren, dass ein entsprechender Kühlmitteldurchsatz bzw. Kühlmitteldruck bereitgestellt wird, ohne dass die Stabilität des Bohrers leidet. Denn die Größe der Kühlkanäle ist begrenzt durch den Abstand zu Bohrerrücken bzw. Spanraum. Bei zu dünnen Stegen kommt es zu Rissen und Werkzeugbrüchen. Bei Mehrschneidigen Einsatzwerkzeugen müssen die Kühlkanäle außerdem einen gewissen Mindestabstand zueinander haben, da ansonsten Beeinträchtigungen der Bohrerstirngeometrie, d.h. z.B. der Querschneide oder einer Ausspitzung hervorgerufen werden.

Bekannte Bohrer weisen dabei meist kreisförmig geschnittene Innenkühlkanäle auf. Daneben sind prinzipiell auch schon Verfahren bekannt, mit denen Sinterrohlinge mit elliptischen Kühlkanalquerschnitten hergestellt werden können, beispielsweise aus der DE 42 42 336 A1. Auch in der US-Patentschrift US 2,422,994 ist von einer von der kreisrunden Form abweichenden Kühlkanalprofil-Formgebung bereits die Rede. Auch Kühlkanäle mit Trigonprofil in Form eines gleichschenkligen Dreiecks mit verrundeten Ecken wurden vorgeschlagen, beispielsweise in der Schrift DE 199 42 966 A1.

Darüber hinaus wurden in der DE 3629035 A1, die den Oberbegriff des Patentanspruchs 1 bildet, schon ein Zweischneider mit einem Kühlkanalprofil in Form eines gleichschenkligen Dreiecks mit verrundeten Ecken vorgeschlagen, mit der eine zentrumsnahe Lage der Innenkühlkanäle ermöglicht werden soll, die eine zentrale Kühlkanalzufuhr am konischen Bohrerende erlaubt.

Aufgabe der Erfindung ist es dagegen, ein innengekühltes Zerspanungswerkzeug der gattungsgemäßen Art hinsichtlich Kühlmitteldurchsatz, Bruch-, Druck- Torsions- und Biegefestigkeit zu verbessern.

Diese Aufgabe wird durch die Merkmale des Anspruchs 1 gelöst.

Der Erfindung liegt dabei die Erkenntnis zugrunde, dass die am Kühlkanal auftretenden Spannungen von der Form des Kühlkanals und somit hauptsächlich aus der Kerbwirkung des Kühlkanals an dessen kleinsten Radien in Lastrichtung resultieren. Ferner wurde erkannt, dass für den Widerstand, den ein Einsatzwerkzeug, beispielsweise ein Bohrer oder Fräser, diesen Spannungsspitzen entgegen setzen kann, d.h. für seine Stabilität und letztlich dafür, ob es zu Rissbildung oder vorzeitigem Bruch des Werkzeugs kommt, neben den am Kühlkanal auftretenden Spannungsspitzen der Abstand der Kühlkanäle zum Spanraum und damit die Lage des Kühlkanals auf dem Steg entscheidend ist.

FEM(Finite-Elemente-Methode)-Simulationen ergaben, dass bei bisher eingesetzten kreisrunden Kühlkanalgeometrien zwar kleine Spannungsspitzen auftreten. Aufgrund der im Wesentlichen kreissegmentförmigen Stege kann der vorhandene Raum im Steg aber nicht optimal genutzt werden, so dass es zu relativ kleinflächigen Kühlkanalquerschnitten kommt. Aufgrund der daraus resultierenden niedrigen Durchsatzmengen stößt man dabei an Grenzen hinsichtlich Länge und Durchmesser des Bohrers.

Andererseits werden bei bekannten Trigonprofilen zwar höhere Durchsatzmengen erzielt. Der Ansatz, mit trigonförmigen Kühlkanalquerschnitten den ohne Unterschreitung einer Mindestwanddicke im Bohrersteg vorhandenen, kreissegmentförmigen Bauraum maximal auszunutzen und so die Durchsatzmengen zu steigern, führt allerdings zu extremen Spannungsspitzen im Kerbgrund des Kühlkanal und somit zu einer verringerten Festigkeit des Einsatzwerkzeugs.

Umfangreiche Versuche und Simulationen führten zur erfindungsgemäßen Querschnittsgeometrie.

Mit der unsymmetrischen Form der Kühlkanalquerschnitte kann der zur Verfügung stehende Bauraum optimal genutzt werden. Auch unter dem Aspekt, dass die höchste Belastung auf der der Hauptschneide zugewandten Seite des Kühlkanals auftritt, während auf der dem Stegrücken zugewandten Seite relativ dazu niedrigeren Belastungen standgehalten werden muss, ist die unsymmetrische Bauform von Vorteil, insbesondere wenn die Stegaufweitung in Radialrichtung auf Seiten der Hauptschneide schneller erfolgt als auf der dem Stegrücken zugewandten Seite.

Mit der experimentell bestimmten Kühlkanalgeometrie und Lage des Kühlkanals auf dem Steg können insbesondere in ihrem Ausmaß überraschend positive Resultate erzielt werden:
Es zeigte sich, dass beim Werkzeug mit erfindungsgemäßem Kühlkanalprofil gegenüber einer Trigonform bei gleichen oder höheren Durchsatzmengen unter Last dramatisch niedrigere lokale Spannungsbelastungen auftreten. Die entsprechend höheren Festigkeitswerte des erfindungsgemäßen Einsatzwerkzeugs wurden in Bruchversuchen bestätigt. Die Versuche wurden dabei bei Werkzeugen aus einem gängigen Hartmetall mit Werten des 0,5- bis 0,85-fachen des Radius eines von der Kontur eingeschlossenen Kreises für den engsten Krümmungsradius durchgeführt. Besonders geeignet erschienen dabei Werte des 0,6 bis 0,85-fachen, insbesondere des 0,7- bis 0,8-fachen des Durchmessers des eingeschlossenen Kreises. So ergab sich beispielsweise bei einem Bohrer mit einem Nenndurchmesser von 4mm ein Mindestradius von 0,75 x Durchmesser des eingeschlossenen Kreises auf der der Spannut zugewandten Seite des Kühlkanals ca. 35% niedrigere Spannungsspitzen bei gleicher Kühlkanalquerschnittsfläche. Dadurch konnte ein Wert von lediglich 0,3 mm für die dortige Mindestwanddicke bei einer ausreichenden Bohrerfestigkeit erreicht werden.

Neben den geringeren Kerbspannungen aufgrund der im Verhältnis zu herkömmlichen Trigonprofilen relativ sanften Verrundungen tritt dabei der zusätzliche Effekt auf, dass die Stelle der Kühlkanalkontur, an der die größte Krümmung anliegt, von der Stelle, an der die Wanddicke des Steges am geringsten ist, versetzt ist. Daraus folgt, dass die Wand an der höchstbelasteten Stelle relativ dick und damit bruchfest ist.

Andererseits steigen die Durchsatzmengen bei einem Einsatzwerkzeug mit der erfindungsgemäßen Kühlkanalgeometrie gegenüber einem Einsatzwerkzeug mit runder Kühlkanalgeometrie fast proportional mit der Querschnittsfläche an, wobei der Anstieg der Kerbspannungen bei steigender Querschnittsfläche im Bereich der erfindungsgemäßen Kühlkanalgeometrie im Vergleich zu dem bei herkömmlichen Trigonprofilen überraschend klein ist. Mit dem erfindungsgemäßen Kühlkanalprofil lassen sich so Querschnittsflächen realisieren, die bei rundem Profil mit gleichem Kühlmitteldurchsatz aufgrund zu niedriger Wandabstände schon zu einem Versagen des Werkzeugs führen würden.

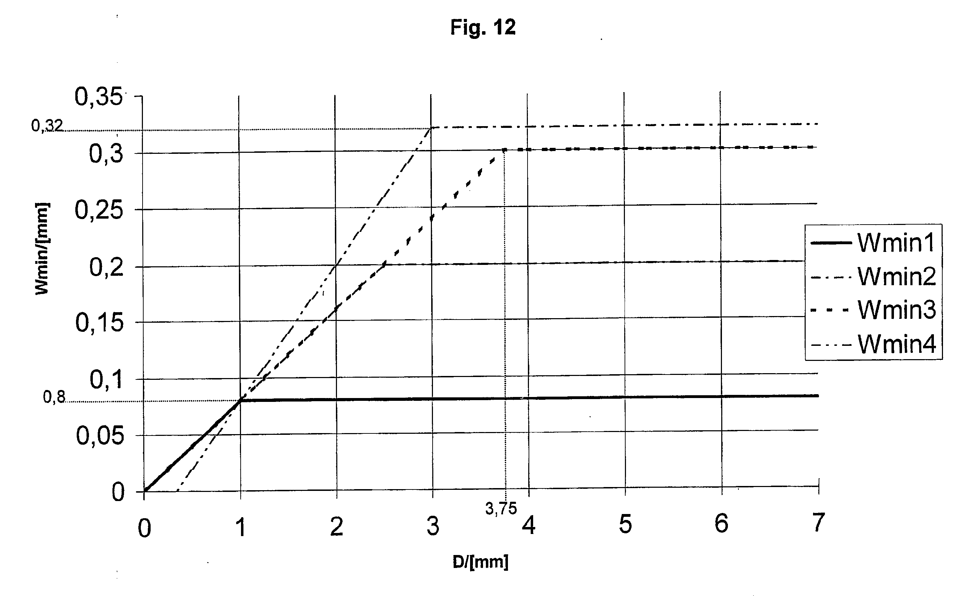

Es ergab sich ein Zusammenhang der hinreichenden Wandstärke zum Nenndurchmesser, der sich bei kleinen Werkzeug-Durchmessern linear mit einem Anstieg der Werkzeugdurchmesser vollzieht. Dazu wird schon an dieser Stelle auf die Figs. 12 bis 14 verwiesen wird, die in Diagrammform die Untergrenze und die Obergrenze für die Mindestwandstärke jeweils über dem Werkzeugnenndurchmesser zeigt. Als hinreichend stabil bei extrem hoher Kühlmittelzufuhr haben sich dabei im Test Wandstärken erwiesen, die oberhalb einer Untergrenze von 0,08 x D für D <= 2,5mm und bei 0,2mm für D > 2,5mm, bevorzugt bei 0,08 x D für D <= 3,75mm und bei 0,3mm für D > 3,75mm, beispielsweise bei 0,1 x D für D <= 3mm und bei 0,3mm für D > 3mm liegen, wobei D den Nenndurchmesser bezeichnet. So hatte der obenstehend erwähnte, getestete Bohrer mit Nenndurchmesser 4mm beispielsweise eine Wandstärke von 0,3mm.

Schon mit derart geringen Wandstärken lassen sich aufgrund der hinsichtlich der Spannungsverteilung im Werkzeugsteg günstigen, erfindungsgemäßen Kühlkanalkonturgestaltung hohe Werkzeugfestigkeiten und damit Standzeiten erzielen. Im Einzelfall kann es sogar schon ausreichend sein, Mindestwandstärken von 0,08mm für Durchmesser ab 1mm vorzusehen.

Andererseits wird die Mindestwandstärke nur durch die gewünschte Durchsatzmenge nach oben hin begrenzt. Hier stellten sich Werte von 0,35 x D für D <= 6mm und von 0,4 x D-0,30mm für D > 6mm, insbesondere von 0,333 x D für D <= 6mm und von 0,4 x D-0,40mm für D > 6mm, bevorzugt von 0,316 x D für D <= 6mm und von 0,4 x D-0,50mm für D > 6mm, besonders bevorzugt von 0,3 x D für D <= 6mm und von 0,4 x D-0,60mm für D > 6mm, beispielsweise von 0,2 x D oder 0,15 x D für D<=4mm und von 0,6mm für D>4mm als geeignete Höchstwerte heraus, bis zu denen eine erfindungsgemäße Kühlkanalkontur sinnvoll ist.

Dabei hatte es sich gezeigt, dass die erfindungsgemäße Kühlkanalgeometrie insbesondere für kleinere Werkzeuge, bei denen es besonders auf eine hinsichtlich Festigkeit und Kühlmitteldurchfluss optimierte Raumausnutzung auf dem Werkzeugsteg ankommt, geeignet ist. Dieser Erkenntnis wurde durch die erfindungsgemäßen Obergrenzen für die Mindestwanddicken Rechnung getragen, die oberhalb eines bestimmten Nenndurchmessers stärker ansteigen als im Bereich kleinerer Durchmesserwerte.

Insbesondere hat es sich herausgestellt, das ab Durchmessern von 6mm ein lineares Anwachsen der Kühlkanalquerschnittsflächen mit dem Nenndurchmesser nur bei einzelnen Anwendungsfällen, wie z.B. bei Tieflochbohrern, sinnvoll ist, da der Bedarf an Schmiermittel auch bei unterproportional anwachsenden Kühlkanalquerschnitten gedeckt werden kann. Selbstverständlich kann es aber auch bei größeren Durchmesserwerten sinnvoll sein, mit der Mindestwandstärke bis an die erfindungsgemäße Untergrenze heranzugehen, um bei ausreichender Festigkeit eine hohe Kühlmittelzufuhr zu erreichen.

Die erfindungsgemäßen Werte für die Obergrenze der Mindestwanddicken tragen dieser Überlegung Rechnung, wobei die erfindungsgemäße Gestaltung der Kühlkanalkontur insbesondere bei Mindestwandstärken im Bereich unterhalb von 0,2 x D sinnvoll ist. Speziell im Mindestwandstärkenbereich unterhalb von 0,15 x D für D <= 4mm und von 0,6mm für D > 4mm erweist sich die durch die erfindungsgemäße Formgebung und Dimensionierung der Kühlkanäle bezogen auf den zur Verfügung stehenden Bauraum erzielte Durchflussmengensteigerung bei gleichzeitiger guter Werkzeug-Festigkeit als überraschend günstig.

Es wurde allerdings berücksichtigt, dass oft Werkzeuge unterschiedlicher Durchmesser aus Rohlingen, insbesondere Sinterrohlingen gleichen Durchmessers gefertigt werden. Die Sinterrohlinge sind dabei gängigerweise als zylindrische Stäbe mit schon eingeformten Kühlkanälen ausgebildet. D.h., dass beispielsweise aus einem Rohling mit einem Rohdurchmesser von 6,2mm Werkzeuge mit Nenndurchmessern von 4mm, 5mm und 6mm gefertigt werden. Bei dem 6mm-Werkzeug mit gleicher Kühlkanalformgebung wie beim 4mm-Werkzeug wäre daher die Mindestwandstärke zwischen Kühlkanal und Werkzeugaußenumfang um 1mm größer. Unter diesem fertigungstechnischem Aspekt befinden sich auch Obergrenzen für die Wandstärke von 0,35 x D für D <= 6mm und von 0,4 x D-0,30mm für D > 6mm, insbesondere von 0,333 x D für D <= 6mm und von 0,4 x D-0,40mm für D > 6mm, bevorzugt von 0,316 x D für D <= 6mm und von 0,4 x D-0,50mm für D > 6mm, besonders bevorzugt von 0,3 x D für D <= 6mm und von 0,4 x D-0,60mm für D > 6mm noch in einem Bereich, in dem die erfindungsgemäße Kühlkanalgeometrie Vorteile bringt.

An dieser Stelle sei erwähnt, dass die Mindestwandstärken zwischen Kühlkanal und Bohreraußenumfang, bzw. Spanfläche oder Spanfreifläche selbstverständlich unterschiedlich gewählt werden kann. Unter Festigkeitsgesichtspunkten kommt es dabei besonders auf den Mindestabstand bzw. die Mindestwandstärke zwischen Kühlkanal und Spanfläche an, die somit gegenüber der Mindestwandstärke zwischen Kühlkanal und Spanfreifläche größer gewählt werden kann. Auch gegenüber der Mindestwandstärke zwischen Kühlkanal und Bohreraußenumfang kann die Mindestwandstärke zwischen Kühlkanal und Spanfläche mit größeren Werten vorgesehen werden, um der höheren Festigkeitsanforderung Rechnung zu tragen. Andererseits kann es beispielsweise unter dem obenstehenden, in der Praxis relevanten Fertigungsaspekt der Rohlinge gleichen Durchmessers für Werkzeuge unterschiedlichen Durchmessers zu einer Mindestwandstärke zwischen Kühlkanal und Bohreraußenumfang kommen, die größer ist als diejenige zwischen Kühlkanal und Spanfläche.

Erfindungsgemäß gelingt es somit insgesamt, den vorhandenen Bauraum auf dem oder den Stegen eines rotierenden Zerspanungswerkzeugs so zu nutzen, dass unerreicht hohe Kühlmitteldurchsatz- und Festigkeitswerte erzielt werden. Denn aufgrund der Form der Kühlkanalkontur können extrem kleine Mindestwandstärken vorgesehen werden, wobei trotz extremer Kühlmitteldurchsatzmengen eine ausreichend hohe Festigkeit des Werkzeugs insgesamt bewirkt wird.

Die vorgeschlagene Querschnittsgeometrie eignet sich dabei gleichermaßen für Bohrer, Reiben und Fräser, beispielsweise Fingerfräser. Es sei erwähnt, dass die erfindungsgemäße Kühlkanalgeometrie auch bei Stufenwerkzeugen, beispielsweise Stufenbohrern, vorteilhaft einsetzbar ist. Der angegebene Nenndurchmesser bezieht sich daher in diesem Fall auf den Werkzeugdurchmesser an der Werkzeugspitze bzw. auf den Durchmesser der Vorbohrung.

Bohrer mit dem erfindungsgemäßen Kühlkanalprofil können dabei sowohl im Lastfall von angreifenden Druckkräften und Drehmomenten, wie sie beim Bohren typisch sind, als auch bei Querkraft- bzw. Biegemomentenbelastung, wie sie beim Eintritt in das zu zerspanende Werkstück auftreten, hohe Lastwerte zerstörungsfrei über lange Standzeiten ertragen. Gleichartige Querkraft- und Biegebeanspruchungen treten auch bei Gleich- oder Gegenlauffräsern auf. Andererseits wird der erzielte Kühlmitteldurchsatz hinsichtlich Menge und Druckabfall über die Werkzeuglänge hohen Ansprüchen gerecht.

Aufgrund der geringen Kerbspannungen bei der erfindungsgemäßen Kühlkanalgeometrie ist es somit einerseits möglich, bei gleichen Wanddicken eine gegenüber herkömmlichen Einsatzwerkzeugen wesentlich verbesserte Stabilität bei zumindest annähernd gleichen Durchsatzmengen zu erzielen oder andererseits die Mindestwanddicke zwischen Kühlkanal und Spanfläche geringer zu dimensionieren, wodurch sich der Kühlkanalquerschnitt und damit der Durchsatz entsprechend vergrößert.

Zu einem erhöhten Kühlmitteldurchsatz bei verringertem Druckabfall trägt dabei der Effekt bei, dass sich aufgrund der großen Radien ein günstiger hydraulischer Radius, d.h. eine bezogen auf die einhüllende Mantelfläche des Kühlkanals große Querschnittsfläche des Kühlkanals ergibt. Die durchschnittliche Strömungsgeschwindigkeit, die wesentlich von der Rohrreibungskraft und der durch den Druckabfall verursachten Gegenkraft abhängt ist also gegenüber den herkömmlichen Trigon-Profilen höher, so dass bei gleicher Querschnittsfläche ein höherer Durchsatz erzielt wird.

Die erfindungsgemäße Kühlkanalgeometrie eignet sich besonders für Werkzeuge bei denen der Konflikt zwischen ausreichender Kühlmittelzufuhr einerseits und ausreichender Festigkeit andererseits besonders problematisch ist, in der Regel also bei Werkzeugen mit kleinen Durchmessern und/oder großer Werkzeuglänge. Gemäß der vorteilhaften Weiterbildung nach Anspruch 2 liegt der Nenndurchmesser dabei im Bereich 1 mm bis 25 mm, insbesondere 1 mm bis 16 mm. Besonders groß sind die Vorteile der erfindungsgemäßen Kühlkanalgeometrie jedoch bei noch kleineren Werkzeugen, deren Nenndurchmesser in einem Bereich von 1mm bis 12mm liegen, insbesondere in einem Bereich von 1 mm bis 6 mm.

Aber auch bei größeren Werkzeugdurchmessern kann die erfindungsgemäße Querschnittsgeometrie sinnvoll sein, um eine maximale Kühlmittelzufuhr zu bewerkstelligen, insbesondere beim Tieflochbohren, bei dem das Kühlmittel mit bis zu 1000 bar in die Innenkühlkanäle gepresst wird, um so genügend Druck bereitzustellen, um die Späne aus dem Bohrloch herauszupressen.

Die erfindungsgemäße Querschnittsgeometrie ist beispielsweise bei Einlippenbohrern einsetzbar. Besonders vorteilhaft wirkt sie jedoch bei zwei- oder mehrschneidigen Werkzeugen, da dort mit kleinen Stegbreiten auch ein entsprechend kleinerer Bauraum für die Innenkühlkanäle zur Verfügung steht. Die erfindungsgemäße Kühlkanalgeometrie eignet sich des Weiteren sowohl für geradegenutete als auch gewendelte bzw. Spiralwerkzeugen.

Nicht nur Werkzeugen mit gewendelten Kühlkanälen werden aber bevorzugt aus Hartmetall, beispielsweise auf Wolframcarbidbasis hergestellt. Die plastifizierte Masse für das Strangpressen wird dabei unter ständigem Durchwalken aus einem Hartmetallpulver unter Zusatz eines Bindemittels, beispielsweise Kobalt, und eines Plastifizierungsmittels, beispielsweise Paraffin, erzeugt. Auch der Einsatz von Keramik oder Cermet sowie sonstigen Sinterwerkstoffen, bei denen die Kühlkanalquerschnittsgeometrie schon bevor das Werkzeug aushärtet - beispielsweise in einem Strangpressverfahren - beim noch weichen Rohmaterial definiert werden kann, sind möglich. Hierzu wird beispielhaft auf die schon eingangs genannte Schrift DE 42 42 336 A1 verwiesen. Es wäre aber theoretisch auch bei Spiralwerkzeugen denkbar, Werkzeuge aus Schnellarbeitstahl (HSS) o.ä. Stählen mit der erfindungsgemäßen Kühlkanalquerschnittsgeomterie auszustatten, beispielsweise mit einem Lasersinterverfahren.

Ein weiteres Strangpressverfahren, das zur Herstellung von gewendelten Werkzeugen mit der erfindungsgemäßen Kühlkanalgeometrie geeignet ist sei hier ebenfalls erwähnt:
Dabei strömt die plastifizierte Masse in einem Strangpresskopf zuerst im Wesentlichen drallfrei in ein Düsenmundstück, um dort entlang der Längsachse zumindest eines, am Düsendorn lagefest befestigten Stifts zur Austrittsöffnung der Düse und durch diese hindurch gepresst zu werden. Die Düse weist dabei eine kreiszylindrische, vorzugsweise im Wesentlichen glatte Oberfläche auf, so dass der entstehende Rohling eine vollzylindrische Außenkontur aufweist. Der angeströmte Stift ist drehfest am Düsendorn gehalten. Der Strömung im Düsenmundstück wird dabei einerseits durch die Steigung der Wendeln des Stiftes und andererseits durch einen sich drehenden Abschnitt des Düsenmundstücks eine Radialkomponente induziert.

Dadurch wird eine insgesamt helixförmige Strömung erzielt, die sich bei Abstimmung der Drehgeschwindigkeit am drehbewegten Abschnitt auf die Steigung der Wendelform des in den Düsenmund hineinragenden Stifts so vollzieht, dass die Strömung der Strangpressmasse der Wendelsteigung im Wesentlichen folgt, d.h. dass die Teilchen auf radialer Höhe des Stiftes eine dem Verlauf des Stiftes entsprechende Strömungsrichtung aufweisen, wodurch eine Biegeverformung des oder der Stifte trotz ihrer lage- und drehfesten Anordnung vermieden werden kann. Auch eine plastische Verformung der Strangpressmasse oder eine ungleichmäßige Gefügebildung oder Dichteverteilung in der Masse kann vermieden werden, da die Radialkomponente der Strömung nicht etwa durch Verdralleinrichtungen oder Umlenkeinrichtungen wie Leitschaufeln etc. aufgezwungen wird, sondern allein durch die Drehbewegung des drehbaren Abschnitts des Düsenmundstücks erzielt wird. Die Radialbewegung der Strömung wird somit nicht durch Umlenkung an einem der Strömung im Weg stehenden Hindernis bewirkt, sondern allein über die der Strangpressmasse inhärenten Reibungskräfte, die bewirken, dass die Masse von der Drehbewegung des Düsenabschnitts mitgenommen wird, wobei sich die so induzierte Drehbewegung von der Düsenwand ausgehend selbstständig zum Inneren der Düse hin fortpflanzt bis sich eine stationäre helixförmige Strömung einstellt, und zwar in einem von der Schubspannung und damit von Viskosität und Zähigkeit der Strangpressmasse abhängigen Verhältnis.

Es kommt somit zu einem weitgehend von Verspannungen und Dichteinhomogenitäten befreiten Gefüge der Strangpressmasse, so dass nach dem Ausschub des Rohlings aus der Düse auch kein nachträgliches Aufzwirbeln wie bei einer durch eine Verdralleinrichtung aufgezwungenen Helixströmung zu befürchten ist. Mit dem erfindungsgemäßen Verfahren lassen sich somit Grünlinge mit hoher Helixgenauigkeit herstellen.

Es sei hervorgehoben, dass als Werkstoff für den Bohrer alle gängigen Werkstoffe moderner Hochleistungsbohrer Anwendung finden können, z.B. HSS-Schnellstahl, aber insbesondere alle Hartmetallsorten. Daneben eignen sich auch keramische, Cermet- oder andere Sintermetall-Werkstoffe für das erfindungsgemäße Werkzeug.

Im Übrigen kann das Werkzeug mit üblichen Beschichtungen ausgestattet sein, und zwar zumindest im Bereich der scharfen Schneiden. Wenn es sich um eine Hartstoffschicht handelt, ist diese vorzugsweise dünn ausgeführt, wobei die Dicke der Schicht vorzugsweise im Bereich zwischen 0,5 und 3 µm liegt.

Die Hartstoffschicht besteht beispielsweise aus Diamant, vorzugsweise monokristallinem Diamant. Sie kann aber auch als Titan-Nitrid- oder als Titan-Aluminium-Nitrid-Schicht ausgeführt sein, da derartige Schichten ausreichend dünn abgeschieden werden. Aber auch andere Hartstoffschichten, beispielsweise TiC, Ti(C,N), Keramik, z.B. Al₂O₃, NbC, HfN, Ti(C,O,N), Mehrlagenbeschichtungen aus TiC/Ti(C,N)/TiN, mehrlagige Keramikbeschichtungen, insbesondere mit Zwischenlagen aus TiN oder Ti(C,N), etc. sind denkbar.

Zusätzlich oder alternativ kann auch eine Weichstoffschicht Anwendung finden, die zumindest im Bereich der Nuten vorliegt. Diese Weichstoffbeschichtung besteht vorzugsweise aus MoS₂.

Nachfolgend werden anhand schematischer Zeichnungen bevorzugte Ausführungsformen der Erfindung näher erläutert.
Fig. 1 zeigt eine Querschnittsansicht eines zweischneidigen Bohrwerkzeugs, wobei mehrere Kühlkanalkonturen, die teilweise nicht Gegenstand der Erfindung sind, eingezeichnet sind, um den Rahmen der Erfindung zu verdeutlichen;
Fig. 2 zeigt eine isometrische Ansicht eines Bohrwerkzeugs mit einer der in Fig. 1 gezeigten Formen des Kühlkanals;
Fig. 3 zeigt eine Querschnittsansicht eines zweischneidigen Bohrwerkzeugs, wobei auf dem oberen Steg eine herkömmliche trigonförmige Kühlkanalkontur eingezeichnet ist, der eine auf dem unteren Steg eingezeichnete Kühlkanalkontur gegenübergestellt ist, die nicht Gegenstand der Erfindung ist aber bei der die größte Krümmung in dem in Anspruch 1 angegebenen Bereich fällt;
Fig. 4 zeigt eine isometrische Ansicht eines Bohrwerkzeugs mit der in Fig. 3 gezeigten Form des Kühlkanals;
Fig. 5 zeigt eine Querschnittsansicht eines zweischneidigen Bohrwerkzeugs, wobei auf dem oberen Steg eine herkömmliche trigonförmige Kühlkanalkontur eingezeichnet ist, der eine auf dem unteren Steg eingezeichnete Kühlkanalkontur gegenübergestellt ist, die nicht Gegenstand der Erfindung ist aber bei der die größte Krümmung in dem im Anspruch 1 angegebenen Bereich fällt;
Fig. 6 zeigt eine isometrische Ansicht eines Bohrwerkzeugs mit der in Fig. 5 gezeigten Form des Kühlkanals;
Fig. 7 zeigt eine Querschnittsansicht eines zweischneidigen Bohrwerkzeugs, wobei auf dem oberen Steg eine herkömmliche trigonförmige Kühlkanalkontur eingezeichnet ist, der eine auf dem unteren Steg eingezeichnete Kühlkanalkontur gegenübergestellt ist, die nicht Gegenstand der Erfindung ist aber bei der die größte Krümmung in dem im Anspruch 1 angegebenen Bereich fällt;
Fig. 8 zeigt eine isometrische Ansicht eines Bohrwerkzeugs mit der in Fig. 7 gezeigten Form des Kühlkanals;
Fig. 9 zeigt eine Querschnittsansicht eines zweischneidigen Bohrwerkzeugs, wobei auf dem oberen Steg eine herkömmliche trigonförmige Kühlkanalkontur eingezeichnet ist, der eine auf dem unteren Steg eingezeichnete Kühlkanalkontur gegenübergestellt ist, die nicht Gegenstand der Erfindung ist aber bei der die größte Krümmung in dem im Anspruch 1 angegebenen Bereich fällt;
Fig. 10 zeigt eine isometrische Ansicht eines Bohrwerkzeugs mit der in Fig. 9 gezeigten Form des Kühlkanals; und
Fig. 11 ist schließlich ein vergleichbares Werkzeug mit gängiger trigonförmiger Kühlkanalquerschnittsgeometrie zu entnehmen;
Fig. 12 zeigt ein Diagramm, bei dem erfindungsgemäße Untergrenzen W_{min,1}, W_{min,2}, W_{min,3}, W_{min,4}, für die Mindestwandstärken zwischen Kühlkanal und Bohreraußenumfang (d_{AUX}), Kühlkanal und Spanfläche (d_{SPX}) sowie Kühlkanal und Spanfreifläche (d_{SFX}) über dem Bohrernenndurchmesser angetragen sind;
Fig. 13 zeigt ein Diagramm, bei dem die erfindungsgemäße Obergrenze W_{max,1}, für die Mindestwandstärken zwischen Kühlkanal und Bohreraußenumfang (d_{AUX}), Kühlkanal und Spanfläche (d_{SPX}) sowie Kühlkanal und Spanfreifläche (d_{SFX}) über dem Bohrernenndurchmesser angetragen ist;
Fig. 14 zeigt ein Diagramm, bei dem erfindungsgemäße Obergrenzen W_{max,1}, W_{max,2}, W_{max,3}, W_{max,4}, W_{max,5}, W_{max,6} für die Mindestwandstärken zwischen Kühlkanal, und Bohreraußenumfang (d_{AUX}), Kühlkanal und Spanfläche (d_{SPX}) sowie Kühlkanal und Spanfreifläche (d_{SFX}) über dem Bohrernenndurchmesser angetragen sind.

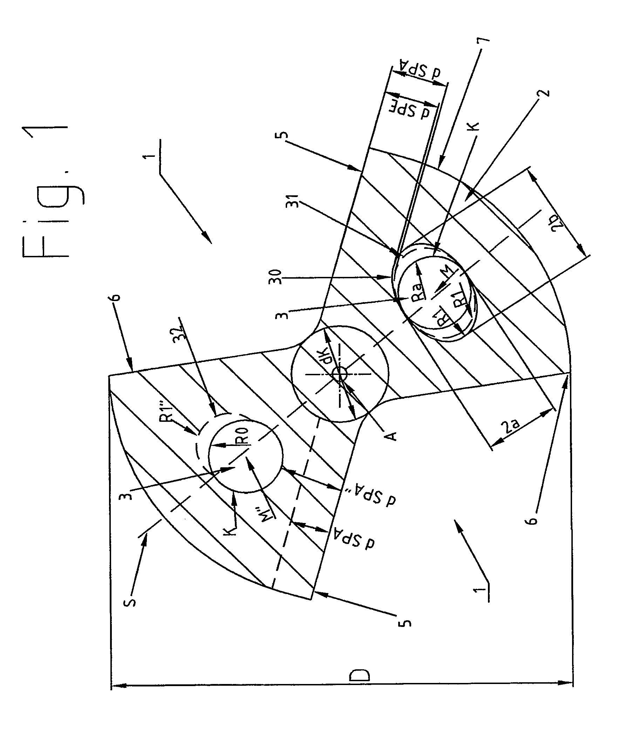

Zunächst wird Bezug genommen auf Fig. 1, der eine Querschnittsansicht eines zweischneidigen, Bohrers mit zwei Stegen 2 und zwei Spannuten 1 zu entnehmen ist. An der schneidenden Seite sind die Stege jeweils durch eine Spanfläche 5 begrenzt, an der nichtschneidenden Seite durch eine Spanfreifläche 6. Dem Außenumfang des Bohrers ist dabei das Bezugszeichen 7 zugeordnet. Ausgehend von einem Bohrerkern mit Durchmesser d_{K} spreizen Spanfläche 5 und Spanfreifläche 6 die Stege 2 auf eine solche Stegbreite auf, dass der Nenndurchmesser D des Bohrers erreicht wird. Dabei sind die Stege in etwa symmetrisch zu einer Stegmittellinie S, die radial zur Bohrerachse A eingezeichnet ist. Auf der Symmetrielinie S befinden sich auf dem unteren Steg 2 der Mittelpunkt M eines Kreises K, der sich vollständig innerhalb der Querschnittsfläche der dortigen Kühlkanalbohrung 3 befindet. Auf dem oberen Steg befindet sich der Mittelpunkt M'' des dortigen Kreises K mit gleichem Durchmesser 2R₀ etwas von der Spanfläche weg nach hinten versetzt vollständig innerhalb der Querschnittsfläche der dortigen Kühlkanalbohrung 3.

Dabei werden mehrere den jeweiligen Kühlkanal umgebende Kühlkanalkonturen 30, 31, 32 gemäß unterschiedlicher Ausführungsformen der Erfindung miteinander verglichen: Am unteren Steg ist mit durchgezogener Linie eine aufgrund der symmetrischen Ausbildung nicht-erfindungsgemäße elliptische Kontur 30 für den Kühlkanal 3 eingezeichnet, eine weitere nicht-erfindungsgemäße Kontur 31 für den Kühlkanal 3 mit gestrichelter Linie. Am oberen Steg ist eine erfindungsgemäße Kontur 32 für den Kühlkanal 3 mit gestrichelter Linie eingezeichnet. Bei allen in Figur 1 gezeigten Konturen 30, 31 und 32 liegen allerdings die Radien der stärksten Krümmung im Bereich, der in Anspruch 1 angegeben ist.

Die Kühlkanalkonturen 30, 31 weisen dabei eine zur Symmetrielinie symmetrische Form auf, während die Kühlkanal 32 nur auf der nichtschneidenden Seite von der durch den berührend eingeschlossenen Kreis K vorgegebenen Kontur abweicht. An den Krümmungsmaxima liegen dabei jeweils die Krümmungsradien R₁, R₁' und R₁'' an, wobei die Konturen 30, 31 jeweils zwei gleich stark geschwungene Krümmungsmaxima aufweisen, während an der Kontur 32 nur ein Krümmungsmaximum mit Radius R₁'' vorhanden ist.

Man erkennt, dass mit der erfindungsgemäßen Kühlkanalquerschnittsgeometrie unter Einhaltung des gleichen Abstands zum Kerndurchmesser d_{K}, den Kühlkanalbohrungen mit einem kreisrunden Durchmesser 2R₀ hätten, ein wesentlicher Zuwachs an Durchtrittsfläche in den der Spanfläche bzw. der Spanfreifläche zugewandten Bereichen des Kühlkanals erzielt werden kann.

Dabei wird die Durchtrittsflächengewinnung nur durch die einzuhaltenden Mindestwanddicken begrenzt, wobei hier der Übersichtlichkeit halber nur die für die Bruchfestigkeit des Bohrers besonders wichtige Mindestwanddicke D_{SPE}, d_{SPA} und d_{SPA}'' zwischen Kühlkanal 3 und Spanfläche 5 für jede der Kühlkanalkonturen 30, 31, 32 eingezeichnet ist.

Die Mindestwanddicken sind wiederum durch die Mindestfestigkeit, die der Bohrer erreichen soll, vorgegeben und damit auch durch die Radien R₁, bzw. R₁' oder R₁'' an den Krümmungsmaxima der jeweiligen Kühlkanalkontur 30, 31, 32. Dies spiegelt sich darin wieder, dass für die elliptische Kühlkanalkontur 30 eine kleinere Mindestwanddicke d_{SPE} als für die Kühlkanalkonturen 31, 32 mit nach außen versetzten Krümmungsmaxima (Mindestwanddicke d_{SPA}) angesetzt werden kann.

Dabei halten die Kühlkanalkonturen 30, 31 die Mindestwanddicke d_{SPE} bzw. d_{SPA} zwischen Kühlkanal 3 und Spanfläche 5 ein, die im Wesentlichen der (nicht benannten) Mindestwanddicke zwischen Kühlkanal 3 und Spanfreifläche 6 entspricht. Dagegen weist die Kontur 32 beispielhaft auf der der Spanfläche 5 zugewandten Seite eine größere Mindestwanddicke d_{SPA}" auf als auf der der Spanfläche 5 abgewandten Seite. Denn einerseits ist der Mittelpunkt M' des eingeschlossenen Kreises von der Schneidseite weg versetzt, andererseits weist die Kühlkanalkontur 32 nur auf der der Spanfreifläche 6 zugewandten Seite ein Krümmungsmaximum (Radius R₁'') auf. Der Verlauf der Kühlkanalkontur 32 macht aber auch deutlich, dass im Rahmen der Erfindung auch Kühlkanalquerschnitte denkbar sind, bei denen das Krümmungsmaximum auf der der Spanfläche zugewandten Seite liegt.

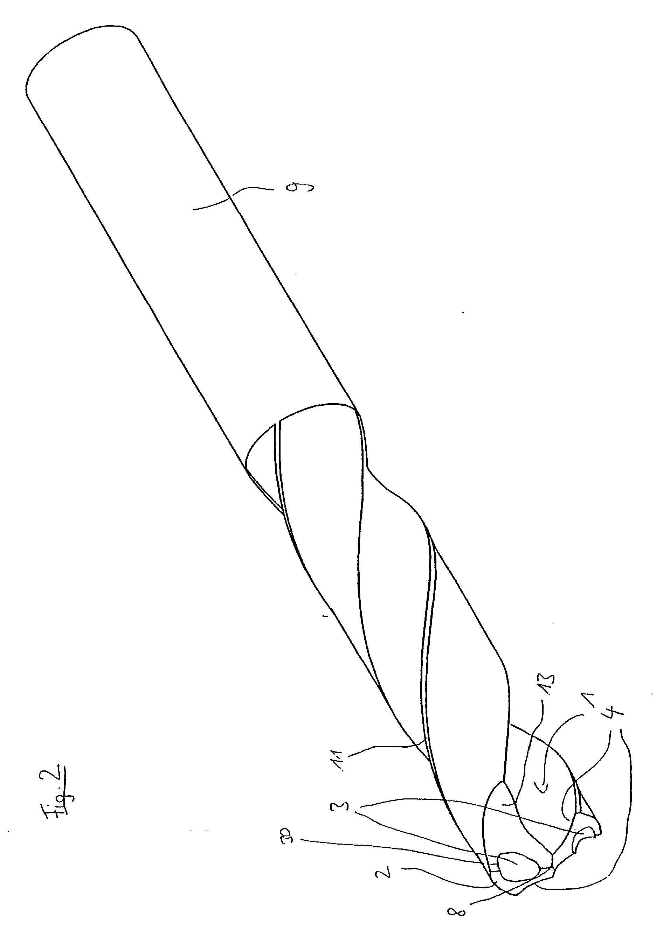

Fig. 2 zeigt eine isometrische Ansicht eines gewendelten Bohrwerkzeugs mit einer elliptischen Kühlkanal-Querschnittskontur 30. Das Werkzeug weist dabei an seinen durch die Spannuten 1 voneinander getrennten beiden Stegen 2 jeweils eine Hauptschneide 4 auf. Die Spannuten 1 und Stege 2 verlaufen unter einem Spiralwinkel von ca. 30° gewendelt bis zu einem als Vollzylinder ausgeführten Bohrerschaft 9, an dem das Werkzeug in eine Werkzeugaufnahme bzw. in ein Spannfutter einspannbar ist. Die Innenkühlkanäle 3 erstrecken sich durch das gesamte Werkzeug hindurch und sind mit dem gleichen Spiralwinkel verdrallt wie Spannuten 1 und Stege 2.

Bei besonders hohen Belastungen setzt man dabei Bohrwerkzeuge aus Vollhartmetall ein, das eine hohe Druckfestigkeit, Verwindungssteifigkeit, Härte und Abnutzungsresistenz aufweist. Solche Hochleistungswerkzeuge werden auch den hohen Belastungen gerecht, die beispielsweise bei der Hartbearbeitung, Trockenbearbeitung, Mindermengenschmierung MMS und der Hochgeschwindigkeitsbearbeitung HSC auftreten. Auch hat man erkannt, dass die Zielsetzungen MMS-Fähigkeit und deutlich höhere Schnittleistung nicht gegenläufig sind, sondern gleichzeitig realisiert werden können. Bohrwerkzeuge, die für den Einsatz mit MMS entwickelt wurden, laufen beispielsweise mit deutlich höheren Vorschüben als Werkzeuge für konventionelle Kühlschmierung. Dabei kommt der zugeführten Kühlmittelmenge eine entscheidende Rolle zu.

In sogenannten High-Performance-Cutting (HPC)-Verfahren wird heute versucht unter Berücksichtigung aller beteiligten Prozessparameter die Fertigungskosten weiter zu senken. Für Werkzeuge sind neben deren Herstellungskosten hauptsächlich die Hauptzeiten und Standzeiten ausschlaggebend, die wiederum entscheidend von den fahrbaren Vorschubgeschwindigkeit abhängen und somit von den bei existierenden Werkzeugmaschinen/ Hochleistungsspindeln erzeugbaren Drehzahlen.

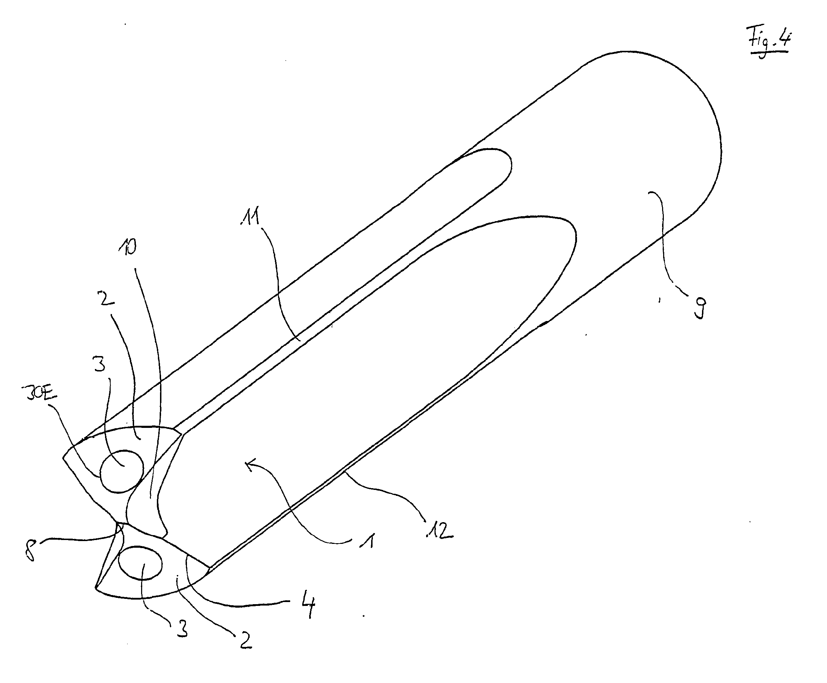

Dabei ist die Vorschubgeschwindigkeit nicht nur von der Drehzahl begrenzt, sondern einerseits auch dadurch, dass darauf zu achten ist, dass bei der Spanabfuhr kein Spänestau entsteht. Im Gegensatz zu gerade genuteten Werkzeugen - diesbezüglich wird auf die Figuren 4, 6, 8 und 10 verwiesen - hat das in Fig. 2 dargestellte gewendelte Werkzeug dabei entscheidende Vorteile. Denn die gewendelte Bauform erlaubt einen erleichterten Abtransport des Gemisches aus Spänen und Schmiermittel. Bei dem in Fig. 2 dargestellten Werkzeug wird dabei das Kühlmittel zu einem großen Teil direkt in die Spannut eingebracht, da sich die Austrittsfläche der Kühlkanäle 3 über beide Abschnitte der durch einen sogenannten Vier-Flächen-Anschliff geteilten Freifläche 13 erstreckt, so dass ein Großteil des Kühlmittels direkt in die Spannut strömt. Zur weiteren Verbesserung der Spanabfuhr-Strömung wäre es dabei auch denkbar, die Spannut so zu gestalten, dass sie sich ausgehend von der Bohrerspitze zum Bohrerschaft hin aufweitet. Auch hinsichtlich Zentriergenauigkeit sind gewendelte Werkzeuge vorteilhaft, da sich diese Werkzeuge über ihren gesamten Außenumfang in der Bohrung abstützen können. Das in Fig. 2 gezeigte Werkzeug weist dazu eine am Schneideneck einsetzende Abstützphase 11 auf.

Andererseits dürfen die Spannungen im Werkzeug nicht über ein ertragenes Maß ansteigen, sonst treten Bruch oder Verschleißerscheinungen ein. Auch hier zeigt sich, dass die Auslegung der Kühlkanäle ein entscheidendes Kriterium für die Nutzbarkeit des Bohrers ist.

Letztlich wurde die erfindungsgemäße Kühlkanalgeometrie durch verschiedene Experimente aufgefunden. Dabei wurden jeweils eine Reihe bis auf die Kühlkanalgeometrie gleichförmiger Werkzeuge mit gleichem Nenndurchmesser einer aus Druck- und Torsionsanteilen bestehenden Belastung unterworfen und die auftretenden Spannungsspitzen an den Kerbgründen, d.h. den Krümmungsmaxima der Kühlkanalquerschnittskonturen ermittelt.

Beispielsweise wurden sechs zweischneidige, geradegenutete Bohrer mit
Nenndurchmesser D=4 mm, und linear verlaufenden Stegaufweitung, Verhältnis Stegbreite zu Nutbreite 1:1,
mit einer
Druckkraft von 860 N und
einem Torsionsmoment von 0,8 Nm
beaufschlagt. Diese Bohrer sind den Figuren 1 und 3 bis 11 zu entnehmen.

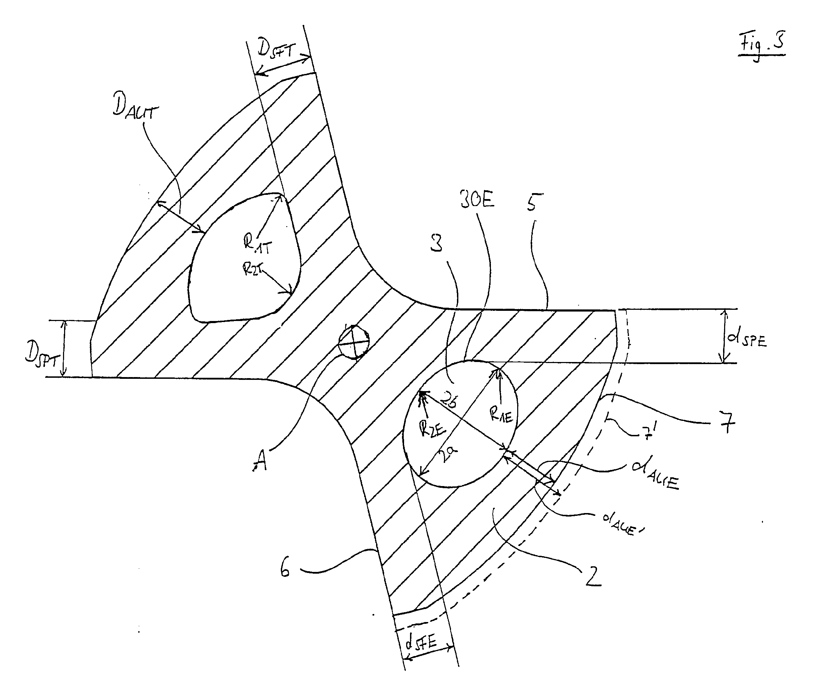

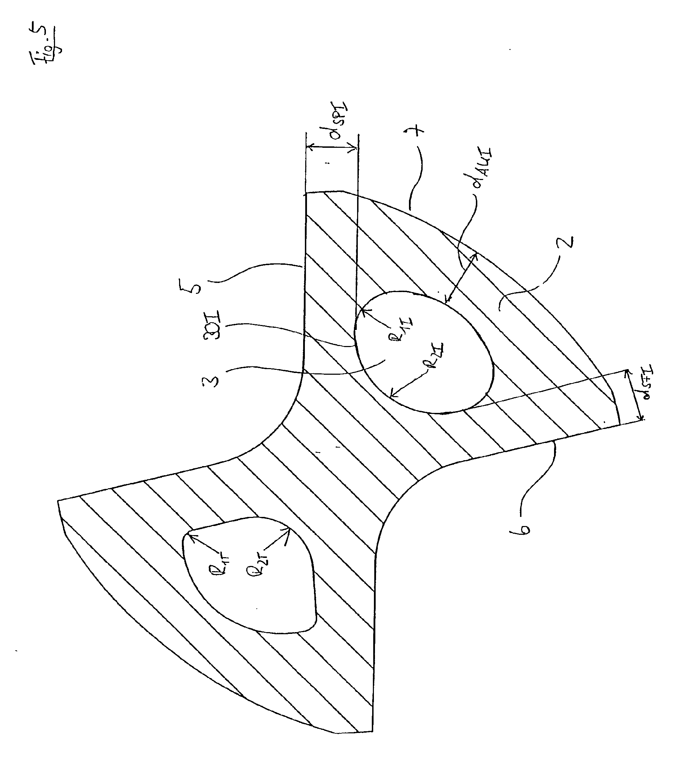

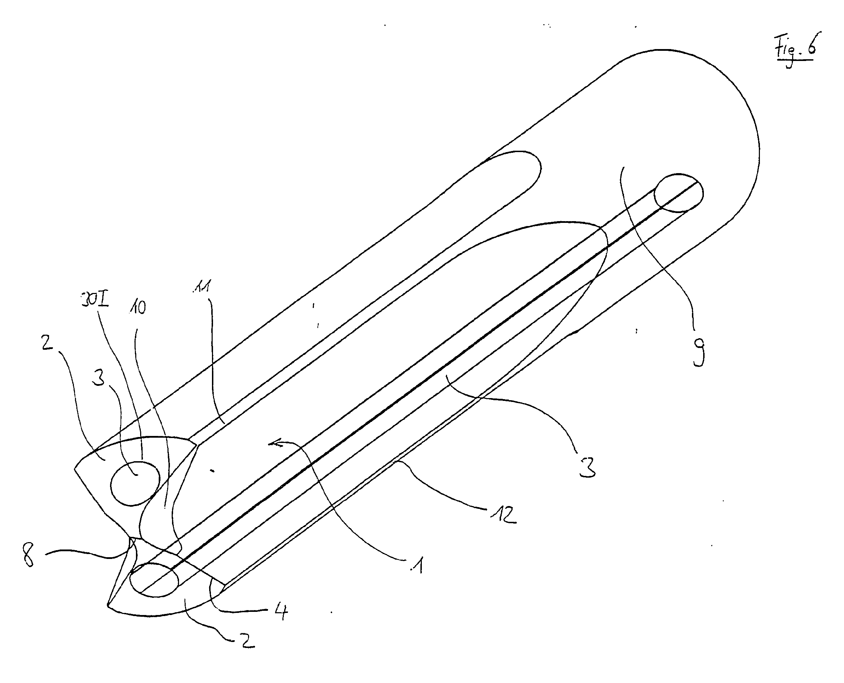

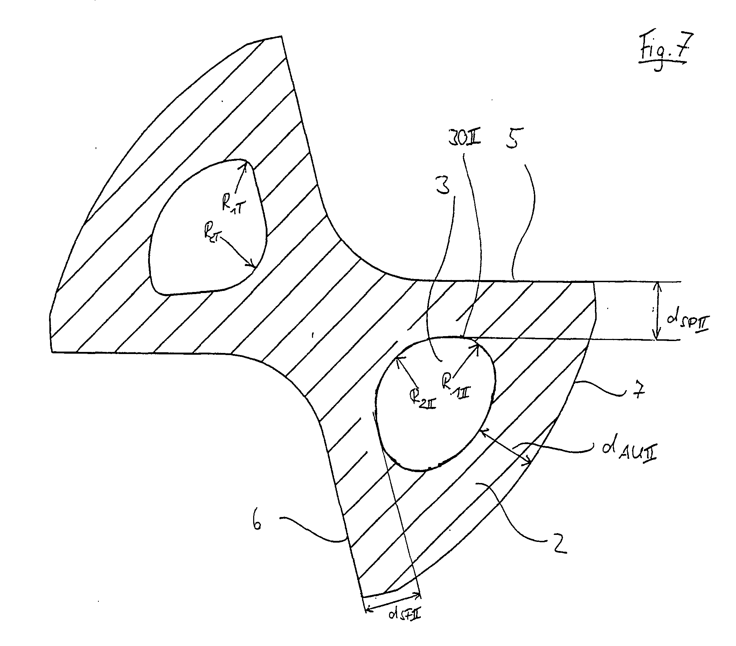

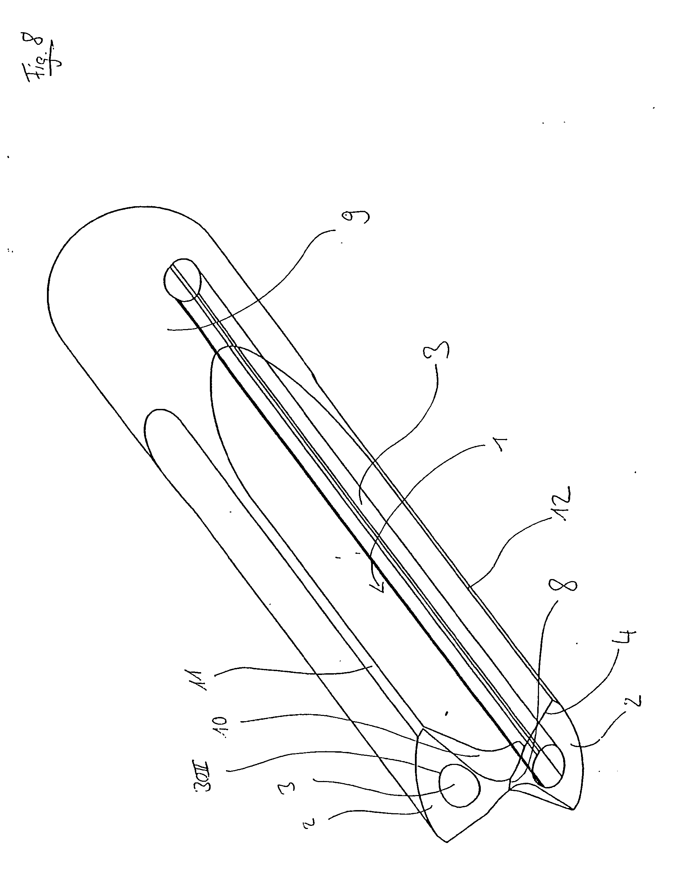

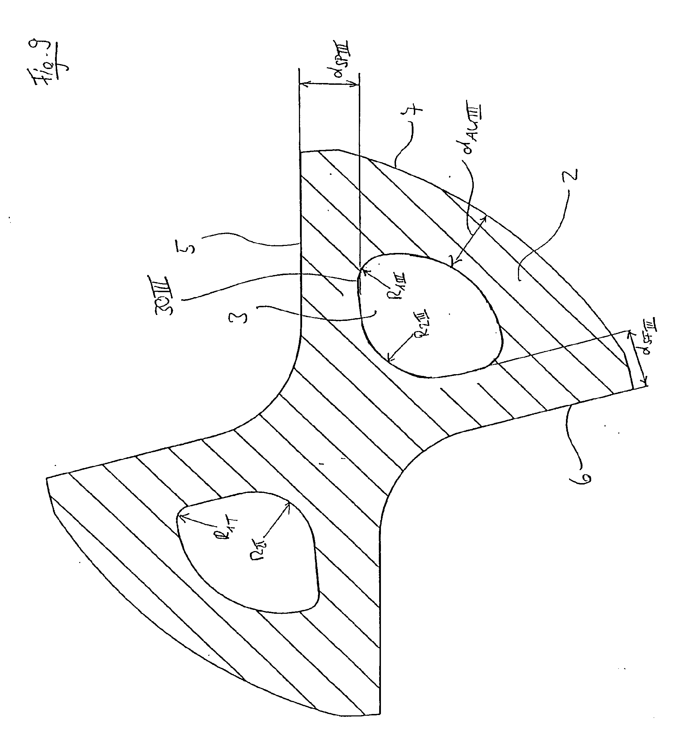

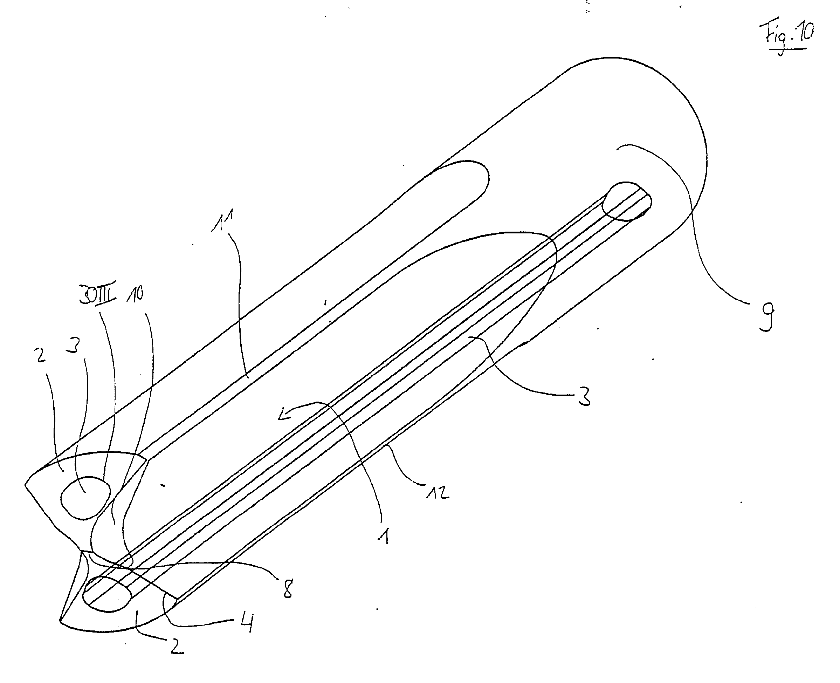

Der Bohrer mit kreisrundem Kühlkanalprofil ist der Fig. 1 zu entnehmen (Kühlkanalkontur folgt überall dem eingeschlossenen Kreis mit Radius R₀). Vier Bohrer mit einer Kühlkanalkontur, bei der - mit Ausnahme der Unsymmetrie - alle erfindungsgemäßen Parameter erfüllt sind, sind dabei in den Figuren 3 bis 10 in vergrößertem Maßstab gezeigt. Jedes der gezeigten Kühlkanalprofile 30E (Fig. 3, 4), 30I (Fig. 5, 6) 30II (Fig. 7, 8) und 30III (Fig. 9, 10) schließt den Kreis mit Radius R₀ berührend ein. Dabei wurden gleiche Merkmale mit den gleichen Bezugszeichen wie in Fig. 1 benannt.

In den Figuren 4, 6, 8 und 10 ist dabei jeweils ein Bohrer mit einer Kühlkanalgeometrie gemäß einer Ausführung nach den Figuren 3, 5, 7 und 9 in isometrischer Ansicht gezeigt. Dabei weisen die Bohrer jeweils gerade Spannuten 1 und Stege 2 mit Führungsfasen 11, 12 auf Seiten der Hauptschneide 4 und auf der der Hauptschneide 4 abgewandten Seite auf. Durch die Bohrer hindurch verlaufen Kühlkanäle 3 von der Bohrerspitze 8 bis zum gegenüberliegenden Ende des Bohrers am Bohrerschaft 9. Die Kühlkanäle 3 treten dabei an der nicht bezeichneten Freifläche des Bohrers aus, die rückseitig durch eine Ausspitzung 10 zwecks Querschneidenverkürzung begrenzt ist. Die Figs. 3, 5, 7 und 9 zeigen einen Bohrerquerschnitt der in den Figs. 4, 6, 8 und 10 gezeigten Bohrer, wobei einem mit Ausnahme der Unsymmetrie erfindungsgemäß gestalteten Kühlkanal auf dem unteren Bohrersteg zu Vergleichszwecken auf dem oberen Bohrersteg jeweils ein Kühlkanal mit herkömmlichem Trigonprofil gegenübergestellt wurde.

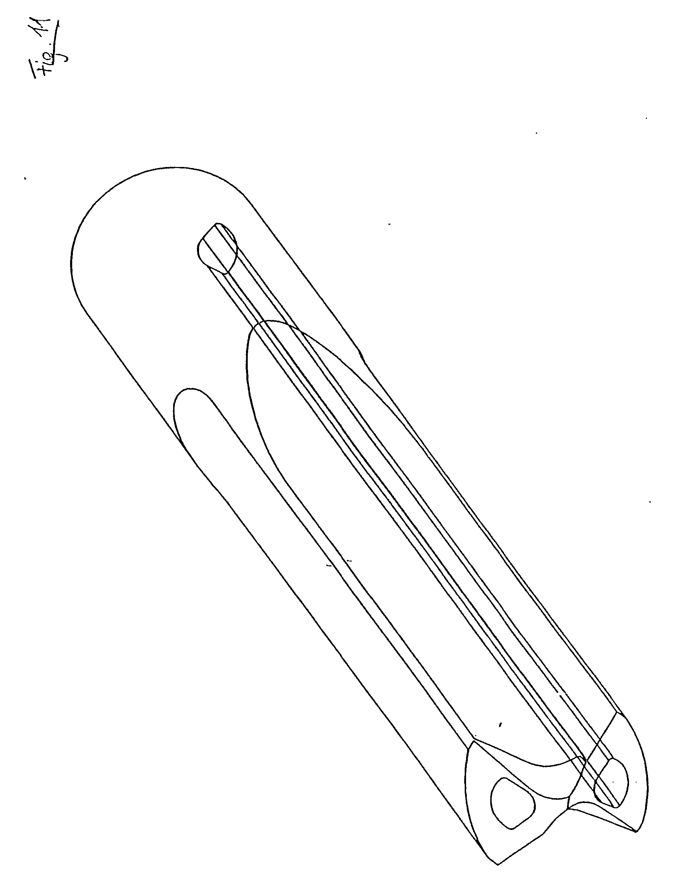

Ein Bohrer mit herkömmlichen Kühlkanal-Trigonprofil bei gleichem eingeschriebenen Kreis mit Radius R₀ ist in Fig. 11 in isometrischer Ansicht gezeigt. In den Querschnittsansichten der Figuren 2, 4, 6, 8 ist ein derartig gestaltetes Kühlkanalprofil jeweils einem mit Ausnahme der Unsymmetrie erfindungsgemäß gestalteten Kühlkanalprofil gegenübergestellt.

Mit d_{SPX}, d_{SFX} und d_{AUX} sind dabei jeweils die Mindestwanddicken zwischen Kühlkanal 3 und Spanfläche 5, Kühlkanal 3 und Spanfreifläche 6 sowie zwischen Kühlkanal 3 und Außenumfang 7 bezeichnet, mit R_{1X} und R_{2X} jeweils der kleinste und der größte an die Kühlkanalkontur anliegende Radius, wobei X für E, I, II, III steht. Die entsprechenden Größen beim trigonförmigen Kühlkanalprofil wurden mit D_{SPT}, D_{SFT} und D_{AUT} bezeichnet.

Für die Kühlkanalprofile wurden folgende Werte verwendet:
- Kreisrundes Kühlkanalprofil mit R₀ = 0,4, Fig. 1
- Elliptisches Kühlkanalprofil 30E mit Hauptachse 2a = 0,55 mm, Nebenachse 2b = 0,4 mm, Figs. 2 und 3;
- Annähernd elliptisches Kühlkanalprofil 30I mit engstem Radius R_{1I} = 0,3 mm, R_{2I} = 0,6 mm, Figs. 4 und 5;
- Annähernd elliptisches Kühlkanalprofil 30II mit engstem Radius R_{1II} = 0,3 mm, weitestem Radius R_{2II} = 0,5 mm, Figs. 6 und 7;
- Annähernd elliptisches Kühlkanalprofil 30III mit engstem Radius R_{1III} = 0,2 mm, weitestem Radius R_{2III} = 0,5 mm, Figs. 8 und 9;
- Trigonförmiges Kühlkanalprofil, engster Radius R_{1T} - 0,1 mm, weitester Radius R_{2T} = 0,4 mm, Fig. 10 sowie Figs. 2, 4, 6, 8.

Die Querschnittsfläche des Kühlkanals in Kreisform ist dabei deutlich geringer als die bei den weiteren Kühlkanälen, während die restlichen Kühlkanäle nahezu gleich große Querschnittsflächen aufweisen:

| | |
|---|---|
| Kreisform: | 0,50 mm² |
| Profil 30E: | 0,69 mm² |
| Profil 30I: | 0,63 mm², |
| Profil 30II: | 0,67 mm², |
| Profil 30III: | 0,66 mm² |
| Trigon: | 0.65 mm². |

Bei der Auswertung der maximalen Spannungsspitzen am zur Spanfläche 5 hingewandten Krümmungsmaximum (im Abstand von 0,25xD zur Hauptschneide) werden dabei die besonderen Vorteile der erfindungsgemäßen Ausführungsformen deutlich. Die mit Ausnahme der Unsymmetrie erfindungsgemäßen Kühlkanalprofile weisen bei in etwa gleicher oder sogar größerer Querschnittsfläche als beim Trigonprofile deutlich niedrigere Spannungswerte auf, während sich gegenüber dem Kreisprofil starke Flächenzuwächse bei gleichzeitig unterproportional ansteigenden Spannungsspitzen ergeben:

| | |
|---|---|
| Kreisprofil: | 700N/mm²; |
| Profil 30E: | 980 N/mm²; |
| Profil 30I: | 1034 N/mm²; |
| Profil 30II: | 1031 N/mm²; |
| Profil 30III: | 1133 N/mm²; |
| Trigonprofil: | 1520 N/mm². |

Man sieht, dass beim Trigon-Kühlkanal bei optimaler Ausnutzung eines tortenstückförmigen Bauraums bei großer Querschnittsfläche dieselbe Mindestwanddicke wie beim kreisförmigen Kühlkanalprofil erreicht wird. Allerdings treten dabei exorbitant hohe Spannungsspitzen (1520 N/mm²) auf, so dass die Bruchgefahr deutlich höher ist, bzw. die Standzeiten des Werkzeugs überproportional absinken.

Hinsichtlich der Spannungsspitzen am Kühlkanal ergibt sich für die mit Ausnahme der Unsymmetrie erfindungsgemäßen Kühlkanalprofile eine gegenüber der Trigonform um ca. 25% - 35% niedrigere Spannungsspitze am Kerbgrund. Je näher dabei an das Trigonprofil angenähert wird, umso stärker steigen die Spannungsspitzen an. Allerdings vollzieht sich dieser Anstieg nicht linear, sondern exponentiell, so dass auch mit dem Profil 30III noch gute Werte erzielt werden können. Bei den Profilen 30E, 30I und 30II waren jedoch bei näherungsweise gleichen Querschnittsflächen fast identische Spannungsspitzen zu verzeichnen.

Dabei wurden bei allen gezeigten Kühlkanalkonturen im Bereich von 8% - 11% vom Nenndurchmesser des Werkzeugs zwischen Spannut und Spanfreifläche eingehalten. Die Wandstärke zwischen Kühlkanal und Spanfreifläche war dabei mit 8% x D bei der Kontur 32 (Fig. 1) besonders klein. Am unteren Steg des in Fig. 3 dargestellten Werkzeugs ist dagegen mit gestrichelter Linie der Außenumriss eines geringfügig größeren Werkzeugs eingezeichnet. Das mit gestrichelter Linie eingezeichnete Werkzeug ist dabei aus dem selben Rohling wie das mit durchgezogener Linie gezeigte Werkzeug hergestellt. Die Form, Lage und Abmessungen des Kühlkanals 3 sind dementsprechend gleich. Allerdings weist das geringfügig größere Werkzeug eine Mindestwandstärke d_{AUE'} zwischen Kühlkanal 3 und Außenumfang 7' auf, die gegenüber der Mindestwandstärke d_{AUE} um mehr als 20% größer ist.

Auch bei kleineren Nenndurchmessern D zeigte sich der erfindungsgemäße Effekt. So wurden auch Bohrer mit Nenndurchmesser D = 1,2 mm, die in den weiteren Abmessungen den oben beschriebenen Bohrern mit D = 4 mm geometrisch ähnlich entsprechen einer Belastungsprobe unterzogen. Dabei wurde jeweils ein Torsionsmoment von 0,026 Nm und eine Druckkraft von 52 N auf die Bohrer aufgebracht. Die Bohrer wiesen dabei folgenden Kühlkanalgeometrien auf:
kreisrunder Kühlkanal mit R_{O} = 0,12 mm und Fläche 0,045 mm²;
elliptischer Kühlkanal mit a = 0,085, b = 0,06, Fläche 0,065 mm²;
trigonischer Kühlkanal mit R₁ = 0,04 mm, R₂ = 0,16 mm, Fläche 0,07 mm²;

Auch hier war die Höchstspannung am Krümmungsmaximum - gemessen 0,25 x D hinter der Hauptschneide - beim Trigonprofil mit 1480 N/mm² exorbitant höher als beim Kreisprofil mit 660 N/mm², während beim Bohrer mit elliptischen Kühlkanälen bei großer Querschnittsfläche mit einem Wert von 950 N/mm² erträgliche Spannungsspitzen auftraten.

In der Fig. 12 sind erfindungsgemäße Werte für die Untergrenze Wₘᵢₙ der Mindestwandstärken über dem Durchmesser D angetragen. Die erfindungsgemäßen Werkzeuge weisen dabei Mindestwandstärken d_{AUX}, d_{SPX}, D_{SFX} auf die auf oder links des Graphen W_{min,1}, insbesondere links des Graphen W_{min,2}, bevorzugt links des Graphen W_{min,3}, beispielsweise links von W_{min,4} liegen.

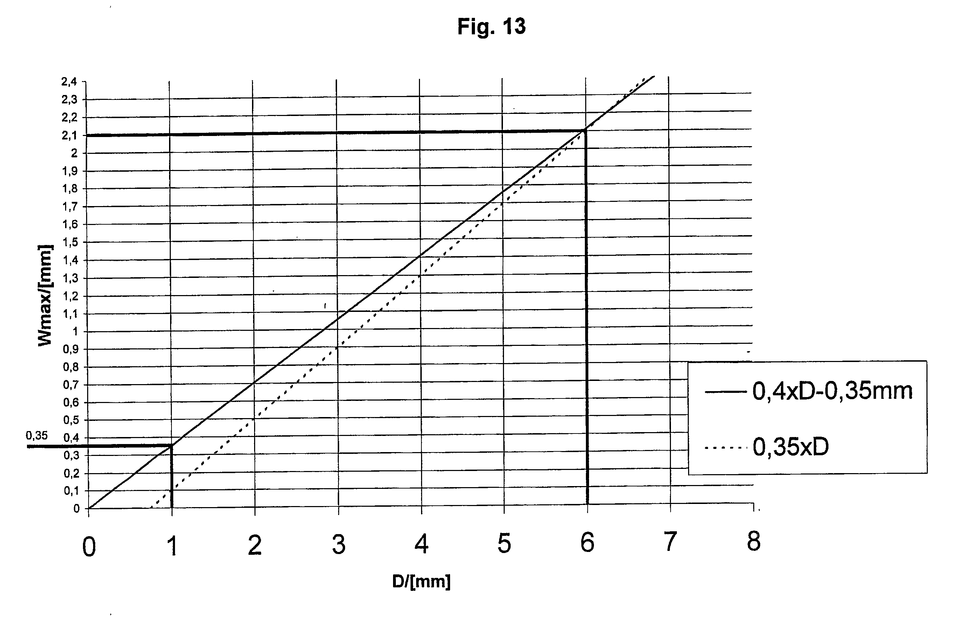

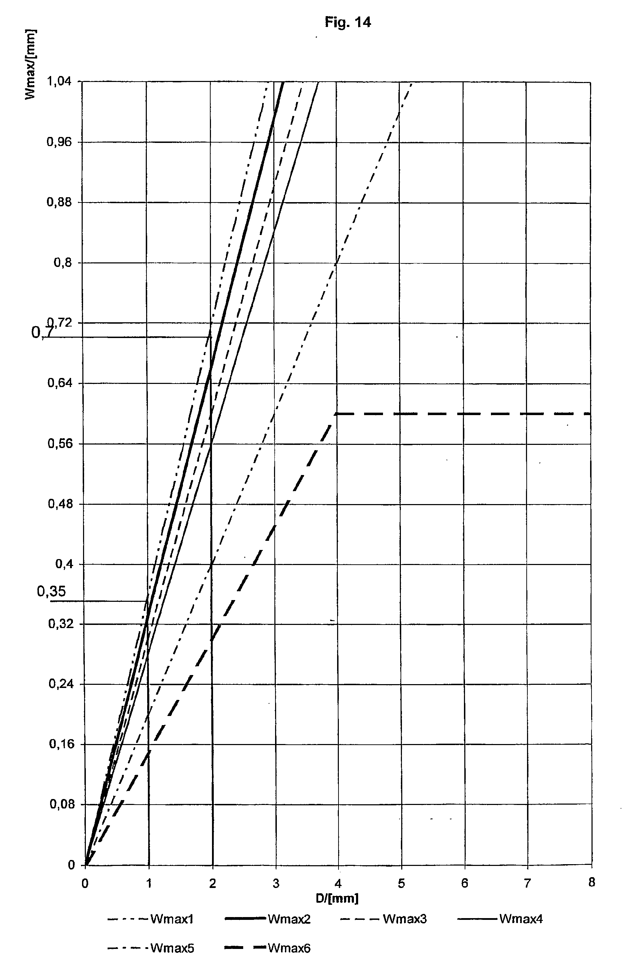

Der Verlauf der Obergrenze W_{max,1} für die Mindestwandstärken d_{AUX}, d_{SPX}, D_{SFX} ist in Fig. 13 über den Nenndurchmesser D angetragen. In Fig. 14 ist dieser Verlauf den bevorzugten Obergrenzen W_{max,2}, W_{max,3}, W_{max,4} W_{max,5} und W_{max,6} gegenübergestellt.

Selbstverständlich sind Abweichungen von den gezeigten Varianten möglich, ohne den Grundgedanken der Erfindung zu verlassen.

Insbesondere wären Kühlkanalkonturen denkbar, bei denen die Radien am Krümmungsmaximum auf der der Spanfläche zugewandten Seite des Kühlkanals größer als auf der der Spanfreifläche zugewandten Seite sind.

Auch ist die Erfindung nicht auf gewendelte oder geradegenutete ein- oder mehrschneidige Werkzeuge mit beliebiger Spitzengeometrie und Nut-Steg-Verhältnis beschränkt, bei denen sich die Schneiden direkt am Werkzeugkopf befinden, sondern kann auch bei Werkzeugen mit angeschraubten oder angelöteten Wende- oder Wechselschneidplatten sowie bei Werkzeugen mit auf den Schaft aufgelötetem Schneidteil oder Bohrkopf zum Einsatz kommen.

Die Erfindung wurde anhand von universal einsetzbaren Zerspanungswerkzeugen beschrieben. Es soll hervorgehoben werden, dass ein spezielles Einsatzgebiet das Tieflochbohren darstellt, wobei die erfindungsgemäße Kühlkanalgeometrie gerade bei relativ kleinen Nenndurchmessern die Vorzüge entfaltet, und zwar selbst dann, wenn das Werkzeug als Tieflochbohrwerkzeug mit extrem kleinem Verhältnis von Nenndurchmesser zu Schneidteillänge ausgestaltet ist.

## Patentansprüche

1. Drehangetriebenes Zerspanungswerkzeug, insbesondere Bohrer, mit einem Bohrernenndurchmesser (D), zumindest einer Spannut (1) und zumindest einem Steg (2), die sich von einer Werkzeugspitze (8) bis zu einem Werkzeugschaft (9) erstrecken, wobei an jedem Steg (2) eine Hauptschneide (4) und ein Innenkühlkanal (3) ausgebildet ist, der sich von der Werkzeugspitze (8) bis zu einem gegenüberliegenden Bohrerende erstreckt und eine kontinuierlich verlaufende Querschnittskontur (32) aufweist, die einen imaginären Kreis (K) mit einem Mittelpunkt (M) berührend einschließt, wobei die Querschnittskontur (32) des Innenkühlkanals (3) zumindest ein, vorzugsweise zwei Krümmungsmaxima aufweist, deren Abstand zur Bohrerachse (A) in Richtung einer Linie zwischen Mittelpunkt (M) und Bohrerachse (A) größer oder gleich dem Abstand des Mittelpunkts (M) zur Bohrerachse (A) ist, mit
Mindestwanddicken (dAUX, dSPX, dSFX) zwischen Innenkühlkanal (3) und Bohreraußenumfang (7, 7'), zwischen Innenkühlkanal (3) und Spanfläche (5) und zwischen Innenkühlkanal (3) und Spanfreifläche (6), die in einem Bereich zwischen einer Untergrenze (Wmin,₁, Wmin,₂, Wmin,₃, Wmin,₄) und einer Obergrenze (Wmax,₁, Wmax,₂, Wmax,₃) liegen, wobei
die Untergrenze bei 0,08 x D für D <= 1 mm und bei 0,08mm für D > 1 mm liegt (Wmin,₁),
die Obergrenze bei 0,35 x D für D <= 6mm und bei 0,4 x D-0,30mm für D > 6mm liegt (Wmax,₁),
**dadurch gekennzeichnet, dass** die Querschnittskontur (32) des Innenkühlkanals (3) unsymmetrisch ist und dass der Radius (R1 ") an der stärksten Krümmung der Querschnittskontur (32) des Innenkühlkanals (3) dem 0,5- bis 0,85-fachen, bevorzugt dem 0,6 bis 0,85-fachen, besonders bevorzugt dem 0,7 bis 0,8-fachen, beispielsweise dem 0,75-fachen des Radius des Kreises (R0) entspricht.

2. Zerspanungswerkzeug nach Anspruch 1,
wobei die Untergrenze der Mindestwanddicken (dAUX, dSPX, dSFX) bei 0,08 x D für D< = 2,5 mm und bei 0,2 mm für D> 2,5 mm (Wmin,₂) liegt, bevorzugt bei 0,08 x D für D< = 3,75 mm und bei 0,3mm für D> 3,75mm (Wmin,₃), beispielsweise bei 0,1 x D für D< = 3mm und bei 0,3 mm für D> 3mm (Wmin,₄), und
wobei die Obergrenze der Mindestwanddicken (dAUX, dSPX, dSFX) bei 0,333 x D für D< = 6mm und bei 0,4 x D -0,40 mm für D> 6mm (Wmax_{,2}) liegt, bevorzugt bei 0,316 x D für D< = 6mm und bei 0,4 x D -0,50mm für D> 6mm (Wmax₃), besonders bevorzugt bei 0,3 x D für D< =6mm und bei 0,4 x D-0,60mm für D> 6mm (Wmax_{;4}), beispielsweise bei 0,2 x D (Wmax_{,5}) oder 0,15 x D für D< =4mm und bei 0,6mm für D> 4mm (Wmax_{,6}).

3. Zerspanungswerkzeug nach Anspruch 1 oder 2, **gekennzeichnet durch** einen Nenndurchmesser (D) im Bereich von 1 mm bis 25 mm, insbesondere 1 mm bis 16 mm, bevorzugt 1 mm bis 12 mm und besonders bevorzugt 1 mm bis 6 mm.

4. Zerspanungswerkzeug nach einem der Ansprüche 1 bis 3, **gekennzeichnet durch** seine Ausgestaltung als Zweischneider oder Mehrschneider.

5. Zerspanungswerkzeug nach einem der Ansprüche 1 bis 4, **gekennzeichnet durch** die Ausbildung als Tieflochbohrwerkzeug mit einem Verhältnis von Nenndurchmesser (D) zu Schneidteillänge im Bereich von 1 : 5 bis zu 1 : 200.

## Claims

1. Rotary cutting tool, in particular drill, having a nominal drill diameter (D), at least one flute (1) and at least one web (2), each of which extend from the tool tip (8) to a tool shank (9), wherein at each web (2) a main cutting edge (4) and an internal cooling channel (3) are formed which extends from the tool tip (8) until an opposite drill end and which has a continuously formed cross section contour (32) tangentially enclosing an imaginary circle (K) having a centre (M), and wherein the cross section contour (32) of the internal coolant channels (3) comprises at least one, preferably two curvature maxima their distances of which to the drill axis (A) in the direction of a line between the centre (M) and the drill axis (A) is greater or at least equal to the distance of the centre (M) to the drill axis (A), having
minimal wall thicknesses (dAUX, dSPX, dSFX) between the internal coolant channel (3) and the drill outer circumference (7, 7'), between internal coolant channel (3) and a chip face (5) and between internal coolant channel (3) and a flute relief face (6) lying in a range between a lower limit (Wmin,₁, Wmin,₂, Wmin,₃, Wmin,₄) and an upper limit (Wmax,₁, Wmax,₂, Wmax,₃), wherein
the lower limit is at 0,08 x D for D <= 1mm and at 0,08mm for D > 1mm (Wmin,₁),
the upper limit is at 0,35 x D for D <= 6mm and at 0,4 x D-0,30mm for D > 6mm (Wmax,₁),
**characterised in that** the across section contour (32) of the internal coolant channel (3) is asymmetric and **in that** the radius (R1") at the strongest curvature of the cross section contour (32) of the internal coolant channel (3) corresponds to 0,5- up to 0,85-times, preferably 0,6 up to 0,85-times, in particular preferably 0,7 to 0,8-times, for example 0,75-times the radius of the circle (R0).

2. Cutting tool according to claim 1,
wherein the lower limit of the minimum wall thicknesses (dAUX, dSPX, dSFX) is at 0,08 x D for D< = 2,5 mm and at 0,2 mm for D> 2,5 mm (Wmin_{,2}), preferably at 0,08 x D for D< = 3,75 mm and at 0,3mm for D> 3,75mm (Wmin_{,3}), preferably at 0,1 x D for D< = 3mm and at 0,3 mm for D> 3mm (Wmin_{,4}), and
wherein the upper limit of the minimum wall thicknesses (dAUX, dSPX, dSFX) is at 0,333 x D for D< = 6mm and at 0,4 x D -0,40 mm for D> 6mm (Wmax_{,2}), preferably at 0,316 x D for D< = 6mm and at 0,4 x D -0,50mm for D> 6mm (Wmax₃), in particular preferably at 0,3 x D for D<= 6mm and at 0,4 x D-0,60mm for D> 6mm (Wmax_{;4}), for example at 0,2 x D (Wmax_{,5}) or 0,15 x D for D< =4mm and at 0,6mm for D> 4mm (Wmax_{,6}).

3. Cutting tool according to claim 1 or 2, **characterized by** a nominal diameter (D) in the range of 1 mm to 25 mm, in particular 1 mm to 16 mm, preferably 1 mm to 12 mm and in particular preferably 1 mm to 6 mm.

4. Cutting tool according to one of the claims 1 to 3, **characterized by** a design as a cutting tool with two or cutting edges.

5. Cutting tool according to one of the claims 1 to 4, **characterized by** a design as a deep hole drilling tool with a ratio of nominal diameter (D) to cutting portion length in the range of 1 : 5 up to 1 : 200.

## Revendications

1. Outil d'enlèvement de copeaux entraîné en rotation, en particulier foret, avec un diamètre nominal de foret (D), au moins une goujure (1) et au moins une nervure (2) qui s'étendent d'une pointe d'outil (8) jusqu'à une tige d'outil (9), une lame principale (4) et un canal de refroidissement intérieur (3) étant réalisés sur chaque nervure (2), lequel canal s'étend de la pointe d'outil (8) à une extrémité de foret opposée et présente un contour de section (32) s'étendant en continu qui forme un cercle imaginaire (K) de manière contiguë avec un point central (M), le contour de section (32) du canal de refroidissement intérieur (3) présentant au moins une, de préférence deux courbures maximales, dont la distance par rapport à l'axe de foret (A) en direction d'une ligne entre le point central (M) et l'axe de foret (A) est supérieure ou égale à la distance entre le point central (M) et l'axe de foret (A), avec
des épaisseurs de paroi minimales (dAUX, dSPX, dSFX) entre le canal de refroidissement intérieur (3) et la périphérie extérieure de foret (7, 7'), entre le canal de refroidissement intérieur (3) et la face de coupe (5) et entre le canal de refroidissement intérieur (3) et la face libre de coupe (6) qui se situent dans une plage entre une limite inférieure (Wmin,₁, Wmin,₂, Wmin,₃, Wmin,₄) et une limite supérieure (Wmax,₁, Wmax,₂, Wmax,₃,),
la limite inférieure se situant à 0,08 x D pour D <= 1 mm et à 0,08 mm pour D > 1 mm (Wmin,₁,)
la limite supérieure se situant à 0,35 x D pour D <= 6 mm et à 0,4 mm x D - 0,30 mm pour D > 6 mm (Wmax,₁,),
**caractérisé en ce que** le contour de section (32) du canal de refroidissement intérieur (3) n'est pas symétrique et **en ce que** le rayon (R1") sur la courbure la plus forte du contour de section (32) du canal de refroidissement intérieur (3) correspond à 0,5 à 0,85 fois, de préférence à 0,6 à 0,85 fois, de manière particulièrement préférée à 0,7 à 0,8 fois, par exemple à 0,75 fois le rayon du cercle (R0).

2. Outil d'enlèvement de copeaux selon la revendication 1,
la limite inférieure des épaisseurs de paroi minimales (dAUX, dSPX, dSFX) se situant à 0,08 x D pour D <= 2,5 mm et à 0,2 mm pour D > 2,5 mm (Wmin,₂), de préférence à 0,08 x D pour D <= 3,75 mm et à 0,3 mm pour D > 3,75 mm (Wmin,₃), par exemple à 0,1 x D pour D <= 3 mm et à 0,3 mm pour D > 3 mm (Wmin,₄), et
la limite supérieure des épaisseurs de paroi minimales (dAUX, dSPX, dSFX) se situant à 0,333 x D pour D <= 6 mm et à 0, 4 mm x D - 0,40 mm pour D > 6 mm (Wmax,₂), de préférence à 0,316 x D pour D <= 6 mm et à 0,4 mm x D - 0,50 mm pour D > 6 mm (Wmax,₃), de manière particulièrement préférée à 0,3 x D pour D <= 6 mm et à 0,4 x D - 0,60 mm pour D > 6 mm (Wmax,₄), par exemple à 0,2 x D (Wmax,₅) ou 0,15 x D pour D <= 4 mm et à 0,6 mm pour D > 4 mm (Wmax,₆).

3. Outil d'enlèvement de copeaux selon la revendication 1 ou 2, **caractérisé par** un diamètre nominal (D) dans la plage de 1 à 25 mm, en particulier de 1 à 16 mm, de préférence de 1 à 12 mm et de manière particulièrement préférée de 1 à 6 mm.

4. Outil d'enlèvement de copeaux selon l'une quelconque des revendications 1 à 3, **caractérisé par** sa configuration à deux tranchants ou plusieurs tranchants.

5. Outil d'enlèvement de copeaux selon l'une quelconque des revendications 1 à 4, **caractérisé par** la réalisation comme foret pour trous profonds avec un rapport entre le diamètre nominal (D) et la longueur partielle de coupe dans la plage de 1:5 à 1:200.
